# EUROPEAN PATENT SPECIFICATION

(11) **EP 2 851 668 B1**
(45) Date of publication and mention of the grant of the patent: **13.03.2019**
(21) Application number: 14185455.4
(22) Date of filing: 18.09.2014
(51) Int. Cl.: G01L 5/28, B60C 11/24, G01M 17/02, E04B 1/348, E04H 6/42, E04H 1/12

(54) **Modular tire tread analyzing station**
Modulare Reifenlaufflächenanalysestation
Poste d'analyse de bande de roulement de pneu modulaire

(30) Priority: 18.09.2013 US 201361879219 P
(43) Date of publication of application: 25.03.2015
(73) Proprietor: T-SCAN, Sarl, 91400 Saclay (FR)
(72) Inventor: Tracy, Roger, Elk Grove Village, IL 60007 (US); Catinot, Jacques, 28220 Dommemain-Saint-Mames (FR); Tracy, Mark, 69450 Saint-Cyr-au-Mont-d'Or (FR)
(74) Representative: Goodman, Simon John Nye

(56) References cited:
- WO-A1-96/10727
- WO-A1-96/21064
- DE-A1-102007 037 943
- US-A- 6 035 585
- US-A1- 2006 225 601
- US-A1- 2008 256 815
- US-A1- 2009 266 390
- US-B1- 6 240 684

## Description

### BACKGROUND

Patent publication WO 96/10727 describes an apparatus comprising scanning means adapted to scan a vehicle tyre and to produce an output indicative of information relating to tyre tread depth, and an indicator means responsive to the output for providing an indication of tread depth. The apparatus may also produce a permanent record on paper or floppy disc. The apparatus may be installed on a garage forecourt or used by the roadside by police.

Patent publication US 2008/0256815 describes an automated device for detecting a profile depth and/or a profile type of a vehicle tyre. The device is intended for use in flowing traffic and uses a camera system for detecting an oncoming vehicle, in particular the number plate.

### SUMMARY OF THE INVENTION

According to its major aspects and briefly recited, the present invention is a modular, drive-through system for analyzing tire tread wear and brake testing. The system includes a modular container that has a floor-mounted tire tread depth analyzer and a flat plate brake tester inside plus other structural and electronic components to facilitate operation. The modular container meets the requirements for an intermodal cargo shipping container and can therefore be shipped anywhere but as a portable self-contained tire tread wear and brake analysis system. Doors open on opposing sides of the modular container to permit a vehicle to be driven through it and, as the vehicle passes over the floor, the vehicle's brakes are tested and it tires are scanned. The scanned output, in the form of a digitized tread profile, when analyzed, indicates remaining tread depth, tire wear patterns from chronic under- or over-inflation, and wheel misalignment. As the vehicle passes through the modular container camera linked to a controller obtains identifying information about the vehicle for association with a tire and brake report. The report is transmitted wirelessly to
the appropriate, pre-designated recipient. The camera also feeds a video image of the vehicle as it enters the container to a monitor visible to the driver of the vehicle to help the driver guide the car inside. Structural components on the floor of the modular container also help to guide the vehicle into position over the tire scanner and brake tester.

The present modular system facilitates and encourages frequent tire tread depth analysis because is quick and can be conveniently and temporarily set up for use, for example, on the parking lot at a tire repair shop, a service station, shopping center, or near the entrance to a car rental lot. The time required for the measurement and analysis is minimal so more cars can be tested in less time than when hand scanning tires, and labor cost is reduced as the system requires no attendant. Furthermore, the information obtained from these measurements is more detailed and accurate than simple visual inspection of tires or measurement of tread depth with a simple tread depth measuring tool.

These and other features and their advantages will be appreciated from a careful reading the Detailed Description of Embodiments of the Invention accompanied by the following drawings.

### BRIEF DESCRIPTION OF THE DRAWINGS

FIG. 1 is a right perspective view of the container showing the entrance and first end door;
FIG. 2 is a left perspective view of the container of FIG. 1 showing the exit door, second end door and man-way, with the man-way opened;
FIG. 3 is a right perspective view of an alternative container showing the entrance;
FIG. 4 is a left perspective view of the alternate container of FIG. 3 showing the exit;
FIG. 5 is a front perspective view of the alternate container of FIGS. 3 and 4 in use with a vehicle inside, with the entrance and exit doors open, the left side door open;
FIG. 6 is a rear, elevated perspective of the container in FIG. 5;
FIG. 7 is a front, right perspective of the container of FIGS. 1 and 2 in use;
FIG. 8 is a rear view of the container of FIG. 7;
FIG. 9 shows the tire tread analyzer and flat plate brake tester, according to an embodiment of the invention;
FIGS. 10A and 10B show two alternate embodiments of correlators, according to an embodiment of the invention; and
FIG. 11 is a schematic showing the relationship of components and transfer of signals and information among the components of the present system.

### DETAILED DESCRIPTION OF EMBODIMENTS OF THE INVENTION

The present invention is a system for analyzing treads of tires of a vehicle and, additionally, the testing the brakes of the vehicle. A system, as used herein, is a group of components that cooperate with each other to achieve a desired result whether or not they are physically attached to together. As used herein, analyzing means making measurements, comparing the measurements with appropriate standards, and drawing conclusions based on the conformity or nonconformity of those measurements to those standards. A vehicle is any wheeled vehicle with tires made of a substance that wears with use.

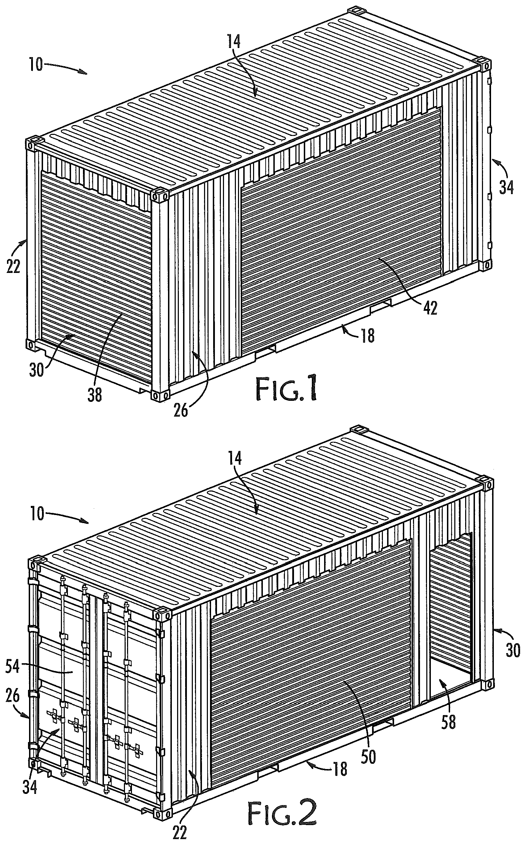

Referring now to the figures, the present system includes a container as shown in FIGS. 1-8. As seen in FIGS. 1 and 2 from right front and left rear perspective, respectively, a container 10 has a roof 14, a floor 18, a back 22, a front 26, a left 30, and a right 34 that enclose the space inside container 10. Container 10, as used herein, is a standard cargo shipping container but optionally may be any closed polyhedron such as the rectangular parallelepiped depicted. FIG. 1 is a right side perspective view of container 10 showing a let side door 38 and an entrance door 42 on front 26. FIG. 2 shows a left perspective view of container 10 with an exit 50, a right side door 54, and a man-way 58, shown open. Doors, such as left side and right side doors 38, 54, entrance door 42, and exit door 50, are a closure for an opening, a closure that may be removed, raised, lowered or pushed to the side to reveal the opening. A closure herein may comprise one or two doors, a roll-up door, a ramp, or a pivotable canopy panel. A roll-up door is a door made of a multiple thin interconnected panels that are mounted crosswise between two, parallel, curved tracks, with the panels' ends captured inside the tracks, so that the door can be moved vertically, rolling it upward and inward along the tracks initially following the plane of the opening and then perpendicular across the inside roof 14 of modular container 10 out of the way for use of the interior. A man-way is a smaller entrance with a correspondingly sized door, dimensioned for users rather than for vehicles 78.

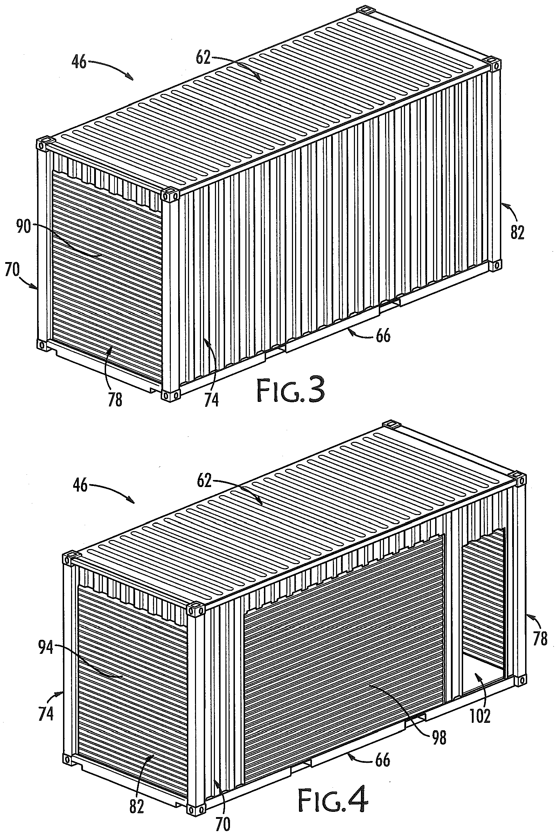

FIGS. 3 and 4 are right side front and left side rear perspective views of an alternate modular container, modular container 46. With respect to modular container 10, the orientation of the unit is orthogonal to that of modular container 46. FIGS. 3 and 4 show a roof 62, a floor 66, a left side 70, a right side 74, a front 78, a back 82, an entrance door 90, an exit door 94, a side door 98, and a man-way 102, shown open.

Entrances 42, 90 and exits 50, 94 are dimensioned to pass a vehicle into and out of said modular containers 10, 46, respectively.

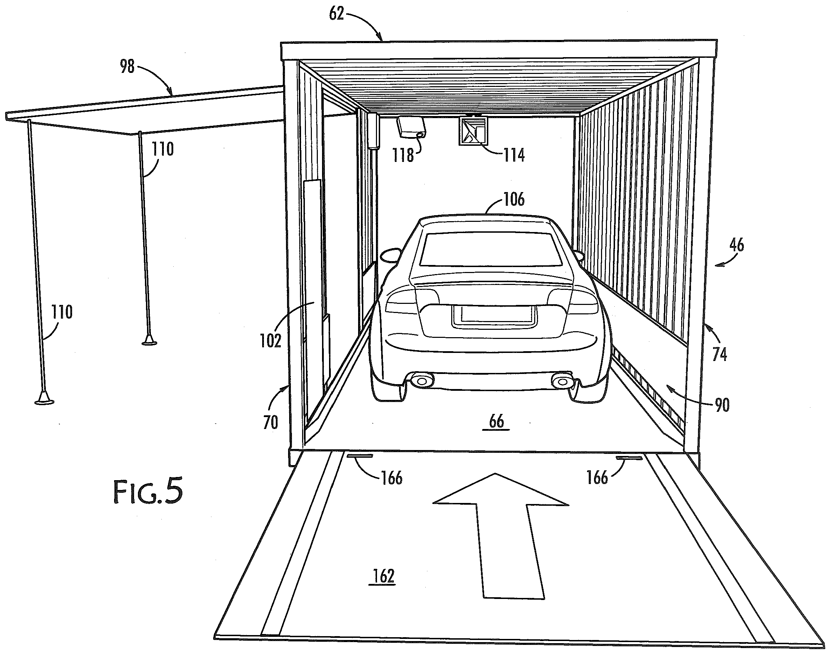

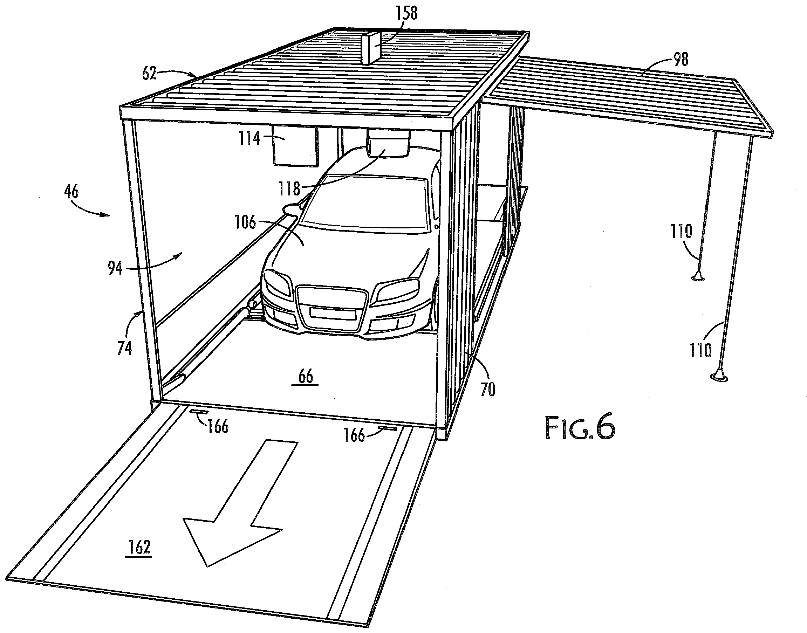

FIGS. 5 and 6 show front and rear perspective views of modular container 46 ready for testing brakes and measuring tire tread depth. Entrance and exit 90, 94, respectively, may be roll up doors. Ramps 160 may be provided with container 46 for use at entrance and exit 90, 94, respectively, for a vehicle 106 to cross when entering and leaving the interior of modular container 46. Side door 98 is shown raised to open part of left side 70 and supported from its corners by two posts 110. Side door 98 may serve as a canopy for an exterior work station for example or just to admit light and air to the interior of container 46 and the opening serves as an alternate exit for the driver. Side door 98 should be located on the side of the modular container 10, 46, corresponding to the driver's side of vehicle 106. Side door 98 is hinged on side 70 near roof 62 of modular container 46 so that side door 98 can be pivoted about a horizontal axis and supported in its overhead position by posts 110.

In modular container 10, the entrance for vehicle 106 is through entrance door 42; the exit is exit 50. Entrance door 42, 90, and exit 50, 94, of modular containers 10 and 46 are designated arbitrarily but, once designated, require consistent use as entrance and exit.

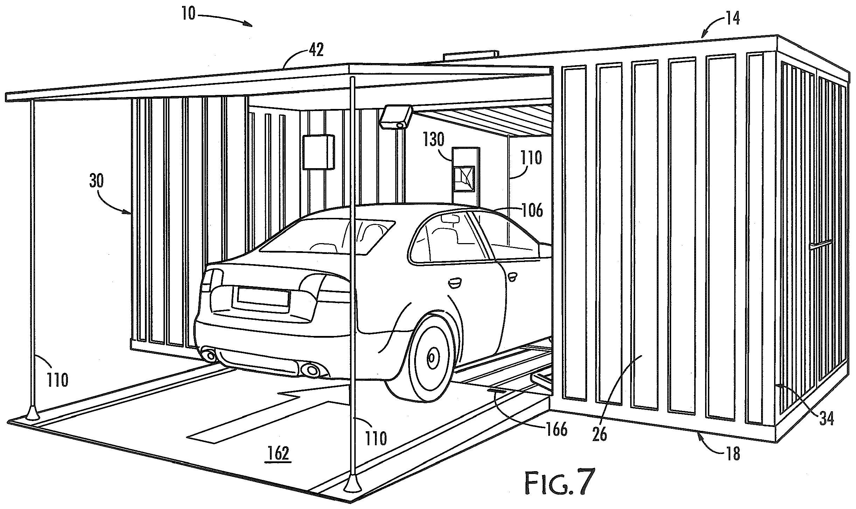

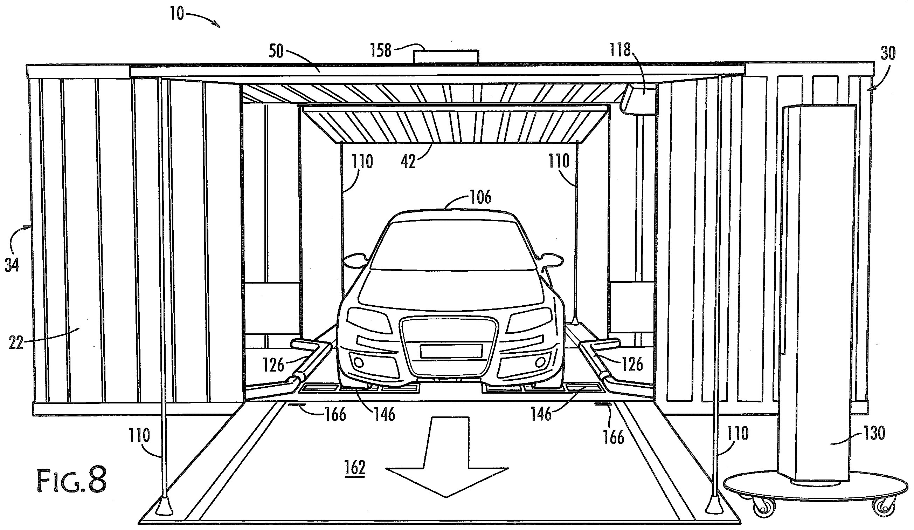

FIGS. 7 and 8 show modular container 10 in use. Vehicle 106 enters modular container 10 through entrance door 42 as a reader, such as a camera (118), mounted overhead reads the license plate of vehicle 106 and feeds the audio signal to a monitor 114. A kiosk 130 positioned on the driver's side of vehicle 106 may be used when the use of present system is offered to the public for a fee, and may permit a credit card to be used for such payment, or tokens or coins. Kiosk 130 may include a reader 134 for cards that, once payment is made, activates the present system.

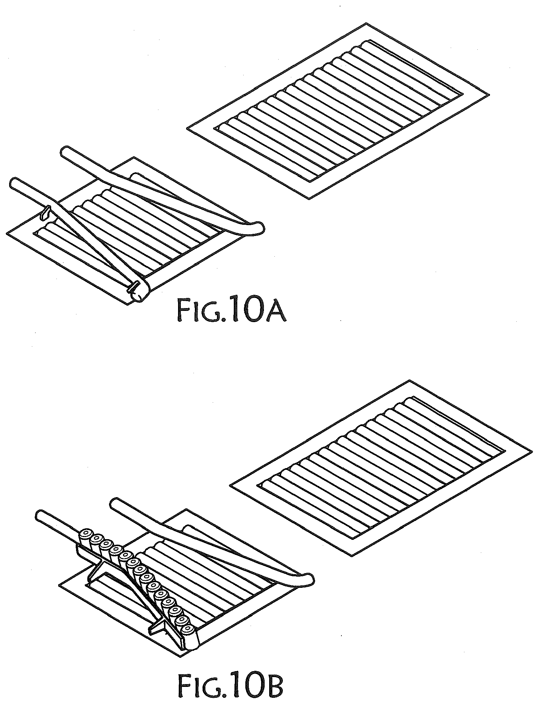

A monitor 114 is positioned for the driver of a vehicle 106 to see upon entering modular container 10, 46, and which shows vehicle 106 in a video image in relation to the position of entrance door 42, 90, and correlators 126 (best seen in FIGS. 10A and 10B), as vehicle approaches them. Video feed to monitor 114 comes from a camera 118 mounted near exit 50, 94, but facing the entrance door 42, 90, when the license plate is on the front of vehicle 106, and positioned near entrance door 42, 90 but facing exit 50, 94, when the license plate is on the back of vehicle 106.

Correlator 126 shown in FIG. 10A and an alternative correlator shown in FIG. 10B help to guide the tires of vehicle 106 so that they are in line with flat plate brake tester 142 and tire tread analyzer 146.

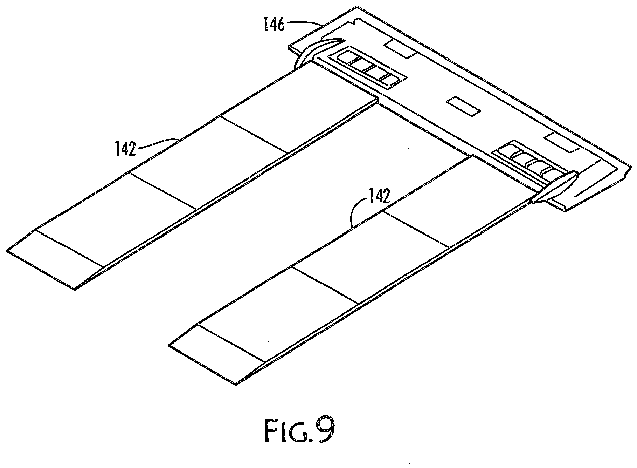

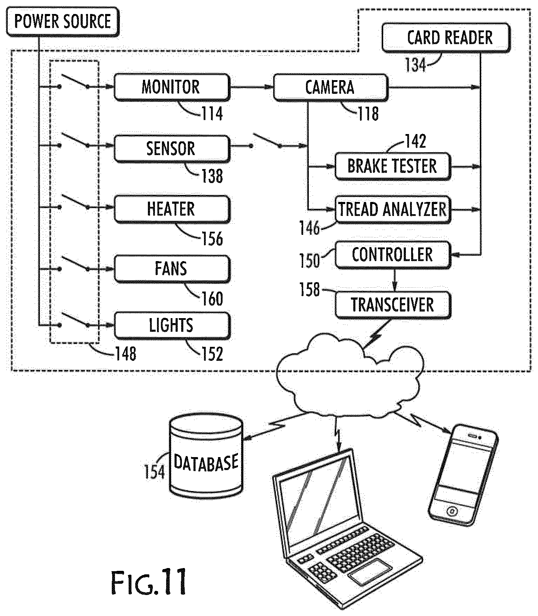

A wireless transceiver 158 is mounted temporarily to roof 62 when modular container 10, 46, is in use but stowable inside otherwise, to enable the captured license plate number to be transmitted to a remote server connected to a database 154 (see FIG. 11) of license plate numbers to identify the owner of vehicle 106 or other pre-selected recipient of a report on tire and brake condition for vehicle 106. A transceiver is a device that both transmits and receives wirelessly in full duplex or half duplex. Inside the modular container 10, 46, carried by floor 14, 66, is a tire tread analyzer 146 and, optionally, a flat plate brake tester 142 (see FIG. 9). Flat plate brake testers are well-known. See, for example, the vehicular plate brake tester 4GPPB-30B made by G&P International Machinery Co, as one example. Analyzer 146 may be a TREADSPEC analyzer sold by Tire Profiles, Inc. of Chicago, IL.

Referring now to FIG. 11, modular container 10, 46, once in position and with doors opened, and connected to a source of electrical power, is activated by electrical switches 148. Power flows to its interior features including interior lighting 152, heat 156, and fans 160. At the entrance of modular container 10, 46, a sensor 138 carried by container 10, 46, detects the front of vehicle 106. Sensor 138, also powered by the power source, may be a laser beam across entrance door 42, 90, and photo-detector that detects the breaking of the laser beam. The detection of vehicle 106 by sensor 138 activates camera 118, so the video feed flows to monitor 114. The tripping of sensor 138 also activates flat plate brake sensor 142 and tread analyzer 146, as shown in FIG 9. The output from these devices feeds to a controller 150 as does the output from camera 118. Controller 150 reads the license plate by accessing a remote database 154 via transceiver 158.

Controller 150 generates a report for the owner of vehicle 106 or other pre-selected individual that contain such identifying information that will enable the recipient of the report to verify the vehicle analyzed is the correct one and the results of the analysis of the treads that of that vehicle 106's tires and the condition of its brakes. That report is transmitted electronically and digitally to the designated recipient in a preselected way including by email, text message, formal report, or mailed report or as part of a report on a fleet of vehicles.

Transceiver 158 may be a wireless transmitter and a WI-FI "hot spot" may be established for the modular container interior using a suitable router 166 with antenna. WI-FI is a registered certification mark, No. 2525795 of the Wi-Fi Alliance for wireless local area networking products, and a hotspot is a site that offers Internet access over a wireless local area network through the use of router connected via a link to an Internet service provider.

Modular container 10, 46 is of the same dimensions as a standard cargo shipping modular container but with a raised and pitched floor so that the tread analyzer 146 can be flush-mounted with the raised floor and the floor can drain toward the ends. Removable metal mesh may be used to cover the floor for removing mud or other debris from the tires of vehicle 10 and for facilitating easy cleaning. Cargo shipping modular containers come in standardized size set forth in international standards by the International Standards Organization. A standard 20 foot modular container is a suitable modular container for use with the present system. Flush-mounted means that the roof surface of the analyzer 146 and the roof surface of the floor lie in the same plane. Ramps may be covered with expanded metal to shake the tires' treads in order to remove water beads from the tread grooves, which water beads may adversely affect tread depth measurements. The entrance and exit may be on the largest or the smallest sides of the modular container. The modular container can be transported to different locations on the back of a flatbed trailer, for example, where it may be set up temporarily or permanently for use in tire tread analysis and brake testing.

Additional features may be included, such as a red/green stop light to signal to the driver to stop for analysis, interior lighting, exterior lighting, a low pressure/ high volume fan to blow dust and dirt off the analyzer and vehicle tyres, and fire suppressant capability. Lighting 152 is preferably LED. Heaters 156 are preferably heating pads positioned under the flat plate brake tester 142 and tread analyzer 146 to keep them at a functional temperature in colder weather. Leveling jacks may be used for each corner of modular container 10, 46 to assure container 10, 46 is level.

In use, the driver of a vehicle drives up to the entrance of the present modular container 10, 46, and into entrance door 42, 90, up a ramp 162. The driver may be required to swipe a credit/debit card at a kiosk 130, or other identification such as a loyalty or club card, for payment or otherwise to be authorized to proceed. Entering container 10, 46 by vehicle 106 is detected by sensor 138, which activates camera 118, flat plate brake tester 142 and tread analyzer 146. Camera 118 feeds video to monitor 114 facing the driver so that he or she may guide vehicle 106 into entrance door 42, 90 of container 10, 46. Further inside, the driver will see correlators 150 that further guide vehicle 106 into position for crossing flat plate brake tester 142 and tire tread analyzer 146. Brake tester 142 and tread analyzer 146 may be positioned in any order.

Meanwhile, the license plate of vehicle 106 has been read and its number is being transmitted to a remote database of license numbers for association with information about vehicle 106 and the identity of the pre-selected recipient of the report to be generated. Tire tread analyzer 146 scans each tire, determines tread depth across the tires and associates that with information about vehicle 106 including the type of tire vehicle 106 was originally equipped with for comparison of its profile to the current tire profiles. Differences indicate tread wear, tread wear patterns, and wheel alignment and may suggest the wheels are misaligned and the tires have been underinflated when driven. The wheels of the vehicle are guided by the correlators on the floor as the vehicle enters the modular container so that the vehicle is aligned with the flush-mounted analyzer 146 and flat brake tester 142. The monitor is positioned so as to be visible to the driver to present instructions, for example, the location of the diagnostic report that will be prepared.

As the vehicle is driven over tread analyzer 146 and brake tester 142, they make their respective measurements. Meanwhile, the vehicle's license plate is being scanned and read by the reader as the vehicle passes over the tire tread analyzer 146 and brake tester 142. The license plate number is then associated with the date, time, the license plate image, the results of the brake testing and tire tread analysis, namely, brake condition, tread wear, wheel alignment, and recommendation for corrective action, such as recommendations for wheel realignment, replacement of brakes and tires, and tire rotation and inflation to comprise a report. This report is transmitted electronically and wirelessly to a preselected recipient, which may be to the owner of the vehicle by email, letter, or text message, to a tire repair store, or to a vehicular fleet management administrator. Alternatively, the modular container may have a card printer that provides the driver with a code for use in accessing the results of the analysis and testing via a designated website.

The present system also includes slots 166 in ramps 162 and tabs, (not shown) on the bottom edges of the entrance doors 42, 90, and exit doors 50, 94. When the entrance and exit doors are closed and locked, their tabs, being in registration with slots 166, insert into slots 166 and secure ramps 162 to modular container 10, 46.

## Claims

1. A system for analyzing treads of tires of a vehicle, said system comprising:
(a) a modular container (10,46) that is a standard cargo shipping container, having an interior, a roof (14,62) and an opposing floor (18,66), a left side (30,70) and an opposing right side (34,74), and a front (26,78) and an opposing back (22,82), and wherein said front carries an openable door (42,90) that, when opened, defines an entrance into said interior, and wherein said back carries an openable door that, when opened, defines an exit (50,94) from said interior, said entrance and said exit being dimensioned to pass a vehicle into and out of said modular container;
(b) a tire tread analyzer (146) carried by said floor of said modular container, adapted so that, when a vehicle drives into said modular container through said entrance and out of said modular container through said exit, said vehicle drives over said tire tread analyzer and said tire tread analyzer generates an analysis of said treads of said tires of said vehicle;
(c) a sensor (138) in operational control with said tire tread analyzer adapted to detect said vehicle driving into said entrance and activate said tire tread analyzer;
(d) a reader mounted in said interior of said modular container and in operational connection with said tire tread analyzer, said reader adapted to read a license number from a license plate of a vehicle in said modular container and to forward said license number to said tire tread analyzer so that said tire tread analyzer associates said license plate number with said analysis;
(e) a wireless transceiver (158) carried by said modular container; and
(f) a controller (150) in communication with said tire tread analyzer, said controller adapted to receive and forward said license plate number from said reader via said wireless transceiver to a remote database (154) to obtain the identity of the owner of said vehicle and to forward said analysis to a pre-designated recipient.

2. The system as recited in claim 1, wherein the reader comprises a camera (118), the camera being directed toward said entrance and said floor of said modular container; and the system further comprising a monitor (114) directed toward said entrance.

3. The system as recited in claim 1 or 2, wherein said tire tread analyzer is adapted to analyze treads for wear and wheel alignment.

4. The system as recited in any preceding claim, wherein a side of said modular container includes a door (50,98) that, when opened, provides an alternate exit from said interior of said modular container, wherein said door is preferably a roll-up door or a hinged door, which particularly preferably opens from inside said modular container.

5. The system as recited in any preceding claim, wherein said floor of said modular container carries a correlator to guide wheels of said vehicle toward said tire tread analyzer.

6. The system as recited in any preceding claim, wherein said floor of said modular container is raised and said analyzer is flush-mounted in said floor.

7. The system as recited in any preceding claim, further comprising a credit card, debit card or loyalty card reader (134).

8. The system as recited in any preceding claim, further comprising a light to signal to the driver to stop said vehicle for analysis.

9. The system as recited in any preceding claim, further comprising a fire suppressant capability, interior lighting (preferably LED), heaters (preferably roof mounted radiant), exterior lighting, low pressure/high volume fan to blow dust and dirt off the analyzer and vehicle tires, and leveling jacks for each corner of the modular container.

10. The system as recited in any preceding claim, wherein said openable door of said front and said openable door of said back are roll-up doors.

11. The system as recited in any preceding claim, wherein said modular container is rectangular and said front and said back are the smallest sides.

12. The system as recited in any preceding claim, wherein said floor of said modular container is pitched for drainage.

13. The system as recited in any preceding claim, further comprising a layer of expanded metal carried on said floor.

14. The system as recited in any preceding claim, further comprising ramps for use at said entrance and said exit, said ramps dimensioned to be stowable inside said modular container.

15. The system as recited in any preceding claim, further comprising a brake tester adjacent to said tire tread analyzer so that, when a vehicle drives into said modular container through said entrance and out of said modular container through said exit, said vehicle drives over said brake tester, said brake tester adapted to generate a signal related to the condition of said brakes of said vehicle.

16. The system as recited in any preceding claim, further comprising a first and a second ramp (162) for use at said entrance and said exit of said modular container, respectively, said first ramp having a first end and an opposing (166) second end and having at least one slot formed in said first end, said second ramp having a first end and an opposing second and having at least one slot (166) formed in said first end, and wherein said modular container has an entrance door for said entrance and an exit door for said exit, said entrance door carrying at least one tab, and said exit door carrying at least one tab so that, when said entrance and said exit doors are closed, said at least one tab of said entrance door enters said at least one slot of said first ramp and said at least one tab of said exit door enters said at least one slot of said second ramp, thereby securing said first and second ramps to said modular container.

## Patentansprüche

1. System zum Analysieren der Laufflächen von Reifen eines Fahrzeugs, wobei das System Folgendes umfasst:
(a) einen modularen Container (10, 46), bei dem es sich um einen Standard-Frachtgut-Transportcontainer handelt, der einen Innenraum, ein Dach (14, 62) und einen gegenüberliegenden Boden (18, 66), eine linke Seite (30, 70) und eine gegenüberliegende rechte Seite (34, 74) sowie eine Vorderseite (26, 78) und eine gegenüberliegende Rückseite (22, 82) aufweist, und wobei die Vorderseite eine zu öffnende Tür (42, 90) trägt, die, wenn sie geöffnet wird, einen Eingang in den Innenraum begrenzt, und wobei die Rückseite eine zu öffnende Tür aufweist, die, wenn sie geöffnet wird, einen Ausgang (50, 94) aus dem Innenraum begrenzt, wobei der Eingang und der Ausgang so bemessen sind, dass ein Fahrzeug in den modularen Container hinein und aus diesem heraus gelangen kann;
(b) einen Reifenlaufflächenanalysator (146), der auf dem Boden des modularen Containers aufliegt und so ausgeführt ist, dass, wenn ein Fahrzeug durch den Eingang in den modularen Container hinein und durch den Ausgang aus dem modularen Container hinaus fährt, das Fahrzeug über den Reifenlaufflächenanalysator fährt und der Reifenlaufflächenanalysator eine Analyse der Laufflächen der Reifen des Fahrzeugs vornimmt;
(c) einen Sensor (138) unter operativer Steuerung des Reifenlaufflächenanalysators, der dazu ausgelegt ist, das in den Eingang fahrende Fahrzeug zu erfassen und den Reifenlaufflächenanalysator zu aktivieren;
(d) eine Lesevorrichtung, die im Innenraum des modularen Containers montiert ist und in operativer Verbindung mit dem Reifenlaufflächenanalysator steht, wobei die Lesevorrichtung dazu ausgeführt ist, eine Zulassungsnummer von einem Nummernschild eines Fahrzeugs in dem modularen Container zu lesen und die Zulassungsnummer an den Reifenlaufflächenanalysator weiter zu leiten, so dass der Reifenlaufflächenanalysator die Zulassungsnummer der Analyse zuordnet;
(e) einen drahtlosen Transceiver (158), der von dem modularen Container getragen wird; und
(f) eine Steuereinheit (150) in Verbindung mit dem Reifenlaufflächenanalysator, wobei die Steuereinheit dazu ausgeführt ist, die Nummer des Nummernschilds von der Lesevorrichtung über den drahtlosen Transceiver zu empfangen und an eine entfernte Datenbank (154) weiter zu leiten, um die Identität des Fahrzeughalters zu erhalten und die Analyse an einen vorher bestimmten Empfänger weiterzuleiten.

2. System nach Anspruch 1, wobei die Lesevorrichtung eine Kamera (118) umfasst, wobei die Kamera auf den Eingang und den Boden des modularen Containers gerichtet ist, und wobei das System ferner einen Monitor (114) umfasst, der auf den Eingang gerichtet ist.

3. System nach Anspruch 1 oder 2, wobei der Reifenlaufflächenanalysator so ausgeführt ist, dass er Laufflächen auf Abnutzung und Spureinstellung analysiert.

4. System nach einem der vorangehenden Ansprüche, wobei eine Seite des modularen Containers eine Tür (50, 98) aufweist, die, wenn sie geöffnet wird, einen alternativen Ausgang aus dem Innenraum des modularen Containers bietet, wobei die Tür vorzugsweise ein Rolltor oder eine Drehtür ist, die besonders bevorzugt vom Inneren des modularen Containers aus zu öffnen ist.

5. System nach einem der vorangehenden Ansprüche, wobei auf dem Boden des modularen Containers ein Korrelator aufliegt, um die Räder des Fahrzeugs zu dem Reifenprofilanalysator zu führen.

6. System nach einem der vorangehenden Ansprüche, wobei der Boden des modularen Containers angehoben ist und der Analysator bündig im Boden montiert ist.

7. System nach einem der vorangehenden Ansprüche, ferner umfassend ein Kreditkarten-, ein Debitkarten- oder ein Kundenkarten-Lesegerät (134); und/oder ferner umfassend eine Leuchte, die dem Fahrer signalisiert, das Fahrzeug zur Analyse anzuhalten.

8. System nach einem der vorangehenden Ansprüche, ferner umfassend eine Leuchte, die dem Fahrer signalisiert, das Fahrzeug zur Analyse anzuhalten.

9. System nach einem der vorangehenden Ansprüche, ferner umfassend eine Feuerlöschfunktion, eine Innenbeleuchtung (vorzugsweise LED), Heizelemente (vorzugsweise am Dach montierte Strahler), eine Außenbeleuchtung, ein Niederdruck-/Hochvolumengebläse zum Abblasen von Staub und Schmutz vom Analysator und von den Fahrzeugreifen und Nivellierstützen für jede Ecke des modularen Containers.

10. System nach einem der vorangehenden Ansprüche, wobei die zu öffnende Tür der Vorderseite und die zu öffnende Tür der Rückseite Rolltore sind.

11. System nach einem der vorangehenden Ansprüche, wobei der modulare Container rechteckig ist und die Vorderseite und die Rückseite die kleinsten Seiten sind.

12. System nach einem der vorangehenden Ansprüche, wobei der Boden des modularen Containers zur Entwässerung geneigt ist.

13. System nach einem der vorangehenden Ansprüche und oder ferner umfassend eine Schicht aus Streckmetall, die auf dem Boden aufliegt.

14. System nach einem der vorangehenden Ansprüche, ferner umfassend Rampen zur Verwendung an dem Eingang und an dem Ausgang, wobei die Rampen so bemessen sind, dass sie innerhalb des modularen Containers verstaubar sind.

15. System nach einem der vorangehenden Ansprüche, ferner umfassend einen Bremsenprüfstand, der an den Reifenlaufflächenanalysator angrenzt, so dass, wenn ein Fahrzeug durch den Eingang in den modularen Container hinein und durch den Ausgang aus dem modularen Container hinaus fährt, das Fahrzeug über den Bremsenprüfstand fährt, wobei der Bremsenprüfstand dazu ausgeführt ist, ein Signal abzugeben, das sich auf den Zustand der Bremsen des Fahrzeugs bezieht.

16. System nach einem der vorangehenden Ansprüche, ferner umfassend eine erste und eine zweite Rampe (162) zur Verwendung an dem Eingang bzw. dem Ausgang des modularen Containers, wobei die erste Rampe ein erstes Ende und ein gegenüberliegendes (166) zweites Ende aufweist und mindestens einen Schlitz aufweist, der in dem ersten Ende ausgebildet ist, wobei die zweite Rampe ein erstes Ende und ein gegenüberliegendes zweites Ende aufweist und mindestens einen Schlitz (166) in dem ersten Ende aufweist, und wobei der modulare Container eine Eingangstür für den Eingang und eine Ausgangstür für den Ausgang aufweist, wobei die die Eingangstür mindestens eine Zunge aufweist und die Ausgangstür mindestens eine Zunge aufweist, so dass, wenn die Eingangstür und die Ausgangstür geschlossen werden, die mindestens eine Zunge der Eingangstür in den mindestens einen Schlitz der ersten Rampe eintritt und die mindestens eine Zunge der Ausgangstür in den mindestens einen Schlitz der zweiten Rampe eintritt, wodurch die erste und die zweite Rampe am modularen Container befestigt werden.

## Revendications

1. Système d'analyse de bandes de roulement de pneus d'un véhicule, ledit système comprenant :
(a) un conteneur modulaire (10,46) qui est un conteneur d'expédition de fret standard, comportant un intérieur, un toit (14,62) et un plancher opposé (18,66), un côté gauche (30,70) et un côté droit opposé (34,74), et un avant (26,78) et un arrière opposé (22,82), et dans lequel ledit avant supporte une porte ouvrante (42,90) qui, lorsqu'elle est ouverte, définit une entrée dans ledit intérieur, ledit arrière supportant une porte ouvrante qui, lorsqu'elle est ouverte, définit une sortie (50,94) dudit intérieur, ladite entrée et ladite sortie étant dimensionnées pour permettre le passage d'un véhicule vers l'intérieur et l'extérieur dudit conteneur modulaire ;
(b) un analyseur de bandes de roulement de pneus (146) supporté par ledit plancher dudit conteneur modulaire de manière à ce que, lorsqu'un véhicule rentre dans ledit conteneur modulaire par ladite entrée et sort dudit conteneur modulaire par ladite sortie, ledit véhicule roule sur le dit analyseur de bandes de roulement de pneus et ledit analyseur de bande de roulement de pneus générant une analyse desdites bandes de roulement desdits pneus dudit véhicule ;
(c) un capteur (138) en commande opérationnel avec ledit analyseur de bandes de roulement de pneus pour détecter l'entrée dudit véhicule par ladite entrée et l'activation dudit analyseur de bandes de roulement de pneus ;
(d) un lecteur monté dans ledit intérieur dudit conteneur modulaire et en connexion opérationnelle avec ledit analyseur de bandes de roulement de pneus, ledit lecteur étant apte à lire un numéro de licence sur une plaque de licence dans ledit conteneur modulaire, ledit lecteur envoyant ledit numéro de licence audit analyseur de bandes de roulement de pneus afin que le dit analyseur de roulements de pneus associe ledit numéro de plaque de licence à ladite analyse ;
(e) un transcepteur sans fil (158) supporté par ledit conteneur modulaire ; et
(f) un contrôleur (150) en communication avec ledit analyseur de bandes de roulement de pneus, ledit contrôleur étant apte à recevoir et envoyer ledit numéro de plaque de licence depuis ledit lecteur via ledit transcepteur sans fil vers une base de données distante (154) pour obtenir l'identité du propriétaire dudit véhicule et pour envoyer ladite analyse à un destinataire pré-désigné.

2. Système selon la revendication 1, dans lequel le lecteur comprend une caméra (118), la caméra étant dirigée vers ladite entrée et ledit plancher dudit conteneur modulaire et le système comprenant en outre un moniteur (114) dirigé vers ladite entrée.

3. Système selon la revendication 1 ou 2, dans lequel ledit analyseur de bandes de roulement de pneus est apte à analyser des bandes de roulement pour vérifier l'usure et l'alignement des roues.

4. Système selon l'une quelconque des revendications précédentes, dans lequel un côté dudit conteneur modulaire comprend une porte (50,98) qui, lorsqu'elle est ouverte, crée une sortie alternative dudit intérieur dudit conteneur modulaire, ladite porte étant de préférence une porte roulante ou une porte articulée qui s'ouvre de manière particulièrement préférentielle depuis l'intérieur dudit conteneur modulaire.

5. Système selon l'une quelconque des revendications précédentes, dans lequel ledit plancher dudit conteneur modulaire supporte un corrélateur pour guider les roues dudit véhicule vers ledit analyseur de bandes de roulement de pneus.

6. Système selon l'une quelconque des revendications précédentes, dans lequel ledit plancher dudit conteneur modulaire set surélevé et ledit analyseur est monté de niveau dans ledit plancher.

7. Système selon l'une quelconque des revendications précédentes, comprenant en outre un lecteur de carte de débit ou de carte de fidélité (134) ; et/ou comprenant en outre un voyant pour signaler aux conducteurs d'arrêter ledit véhicule pour l'analyse.

8. Système selon l'une quelconque des revendications précédentes, comprenant en outre un voyant pour signaler au conducteur d'arrêter ledit véhicule pour l'analyse.

9. Système selon l'une quelconque des revendications précédentes, comprenant en outre un équipement antifeu, un éclairage intérieur (de préférence à base de LED), des radiateurs (de préférence monté de manière à irradier par le toit), un éclairage extérieur, un ventilateur à basse pression/haut volume pour souffler la poussière et les impuretés hors de l'analyseur et des pneus du véhicule et des vérins de mise à niveau pour chaque coin du conteneur modulaire.

10. Système selon l'une quelconque des revendications précédentes, dans lequel ladite porte ouvrante dudit avant et ladite porte ouvrante dudit arrière sont des portes roulantes.

11. Système selon l'une quelconque des revendications précédentes, dans lequel ledit conteneur modulaire est rectangulaire et le dit avant et ledit arrière sont les côtés les plus petits.

12. Système selon l'une quelconque des revendications précédentes, dans lequel le dit plancher dudit conteneur modulaire est incliné pour permettre le drainage.

13. Système selon l'une quelconque des revendications précédentes, comprenant en outre une couche de métal expansé supportée par ledit plancher.

14. Système selon l'une quelconque des revendications précédentes, comprenant en outre des rampes destinées à être utilisées à ladite entrée et ladite sortie, lesdites rampes étant dimensionnées de manière à pouvoir être arrimées sur ledit plancher.

15. Système selon l'une quelconque des revendications précédentes, comprenant en outre un testeur de freins adjacent audit analyseur de bandes de roulement de pneus, de sorte que, lorsqu'un véhicule rentre dans ledit conteneur modulaire par ladite entrée et sort dudit conteneur modulaire par ladite sortie, ledit véhicule passe sur ledit testeur de frein, ledit testeur de frein étant apte à générer un signal concernant l'état desdits freins dudit véhicule.

16. Système selon l'une quelconque des revendications précédentes, comprenant en outre une première une seconde rampes (162) destinées à être utilisées respectivement à ladite entrée et à ladite sortie dudit conteneur modulaire, ladite première rampe ayant une première extrémité et une seconde extrémité opposée (166) et comportant au moins une fente pratiquée dans ladite première extrémité, ladite seconde rampe ayant une première extrémité et une seconde extrémité opposée et comportant au moins une forme de fente (166) dans ladite première extrémité, et dans lequel ledit conteneur modulaire comporte une porte d'entrée pour ladite entrée et une porte de sortie pour ladite sortie, ladite porte d'entrée supportant au moins une patte et ladite porte de sortie supportant au moins une patte, de sorte que, lorsque lesdites portes d'entrée et de sorties sont fermées, ladite au moins une patte de ladite porte d'entrée rentre dans ladite au moins une fente de ladite première rampe et ladite au moins une patte de ladite porte
de sortie rentre dans ladite au moins une fente de ladite seconde rampe en fixant ainsi lesdites première et seconde rampes sur ledit conteneur modulaire.
